# EUROPEAN PATENT SPECIFICATION

(11) **EP 3 090 155 B1**
(45) Date of publication and mention of the grant of the patent: **11.07.2018**
(21) Application number: 14830565.9
(22) Date of filing: 17.12.2014
(51) Int. Cl.: F01N 3/10, F01N 3/025, F01N 13/00, F01N 3/20, F01N 9/00, F01N 3/023

(54) **EXHAUST GAS CONTROL DEVICE FOR INTERNAL COMBUSTION ENGINE MOUNTED ON VEHICLE**
ABGASREINIGUNGSVORRICHTUNG FÜR FAHRZEUGMONTIERTEN VERBRENNUNGSMOTOR
DISPOSITIF DE COMMANDE DES GAZ D'ÉCHAPPEMENT POUR MOTEUR À COMBUSTION INTERNE MONTÉ SUR UN VÉHICULE

(30) Priority: 25.12.2013 JP 2013266726
(43) Date of publication of application: 09.11.2016
(73) Proprietor: TOYOTA JIDOSHA KABUSHIKI KAISHA, Toyota-shi, Aichi-ken, 471-8571 (JP)
(72) Inventor: OTA, Hirohiko, Toyota-shi, Aichi-ken, 471-8571 (JP)
(74) Representative: Intès, Didier Gérard André
(86) International application number: PCT/IB2014/002826
(87) International publication number: WO 2015/097520

(56) References cited:
- EP-A1- 2 581 571
- EP-A2- 1 630 369
- GB-A- 2 454 341

## Description

### BACKGROUND OF THE INVENTION

### 1. Field of the Invention

The invention relates to an exhaust gas control device for an internal combustion engine mounted on a vehicle.

### 2. Description of Related Art

As described in Japanese Patent Application Publication No. 2010-71270 (JP 2010-71270 A) and the like, an apparatus that is provided with a reduction solution supply valve which supplies a reduction solution into an exhaust passage is known as an exhaust gas control device for an internal combustion engine mounted on a vehicle. In the exhaust gas control device, the reduction solution that is supplied into the exhaust passage from the reduction solution supply valve is used to reduce and purify NOx in an exhaust gas. In the apparatus that is described in JP 2010-71270 A, the supply of the reduction solution is not performed while the vehicle is stopped.

In an alternative exhaust gas control device for an internal combustion engine mounted on a vehicle, a filter that collects particulate matter in an exhaust gas is provided in an exhaust passage. In a case where the filter is provided, a regeneration processing for regenerating the filter is executed by supplying a fuel into the exhaust passage and combusting the particulate matter collected by the filter.
EP 1 630 369 relates to a method for operating an exhaust gas cleaning device in an internal combustion engine, in particular a motor vehicle.
GB 2 454 341 relates to a system and method for controlling excessive exhaust gas temperatures.
EP 2 581 571 relates to an exhaust gas purification system.

### SUMMARY OF THE INVENTION

The regeneration processing is executed even when the vehicle is stopped insofar as an execution condition is met during an operation of the internal combustion engine. When the regeneration processing is executed while the vehicle is stopped, an exhaust gas temperature in the exhaust passage increases because cooling of an exhaust system by traveling wind is not performed. Accordingly, for example, the temperature of the exhaust gas discharged from the vehicle may also increase.

The invention provides an exhaust gas control device for an internal combustion engine, mounted on a vehicle, that is capable of suppressing a rise in a temperature of an exhaust gas attributable to a regeneration processing for a filter executed while a vehicle is stopped.

According to an aspect of the invention, there is provided an exhaust gas control device for an internal combustion engine, mounted on a vehicle, including a filter provided in an exhaust passage, the filter being configured to collect particulate matter and a reduction solution supply valve provided downstream of the filter in an exhaust gas flow direction, the reduction solution supply valve being configured to supply a reduction solution for exhaust gas purification into the exhaust passage and executing a regeneration processing to regenerate the filter by supplying a fuel into a portion of the exhaust passage located upstream of the filter in the exhaust gas flow direction. The exhaust gas control device controls the reduction solution supply valve to supply the reduction solution when an exhaust gas temperature exceeds a predetermined temperature while the regeneration processing is executed with the vehicle being stopped.

According to this configuration, the reduction solution is supplied into the exhaust passage in a case where the exhaust gas temperature exceeds the predetermined temperature while the regeneration processing is executed with the vehicle being stopped. The supplied reduction solution is vaporized in the exhaust passage and takes ambient heat, and thus the exhaust gas temperature in the exhaust passage is lowered. Accordingly, rise in the exhaust gas temperature attributable to the regeneration processing for the filter while the vehicle is stopped can be suppressed.

In this configuration, the reduction solution supply valve is disposed on an exhaust downstream side from the filter, and thus the exhaust gas temperature on an exhaust downstream side from the filter is lowered by a vaporization heat of the reduction solution. Accordingly, the exhaust gas temperature on an exhaust downstream side from the reduction solution supply valve can be lowered even without having to significantly lower a regeneration temperature itself of the filter.

In the exhaust gas control device above, the control device is further configured to control an injection pressure of the reduction solution such that the injection pressure when the reduction solution is supplied from the reduction solution supply valve by the exhaust gas temperature exceeding the predetermined temperature is higher than the injection pressure when the reduction solution is supplied for exhaust gas purification.

According to this configuration, the injection pressure of the reduction solution is higher in a case where the reduction solution is supplied so as to lower the exhaust gas temperature than in a case where the reduction solution is supplied so as to purify an exhaust gas. Accordingly, atomization of the supplied reduction solution is accelerated and the vaporization of the reduction solution is promoted. When the vaporization of the supplied reduction solution is promoted in this manner, the amount of the reduction solution that is adhered to an inner wall of the exhaust passage decreases, and discharge of the reduction solution from the exhaust passage can be suppressed when the stopped vehicle starts moving.

In addition, the atomization of the supplied reduction solution is unlikely to proceed when a rotation speed of the internal combustion engine is low and an exhaust gas flow rate in the exhaust passage is low as in an idle operation state. The atomization of the supplied reduction solution can be accelerated, even though the exhaust gas flow rate is low, when the injection pressure of the reduction solution becomes higher as the engine rotation speed of the internal combustion engine becomes lower.

In the exhaust gas control device, the control device may be configured to control a supply amount of the fuel such that the supply amount when the exhaust gas temperature exceeds the predetermined temperature while the regeneration processing is executed with the vehicle being stopped is smaller than the supply amount when the exhaust gas temperature does not exceed the predetermined temperature while the regeneration processing is executed with the vehicle being stopped.

According to this configuration, the fuel supply amount is decreased in a case where the exhaust gas temperature exceeds the predetermined temperature while the regeneration processing is executed with the vehicle being stopped. Accordingly, the combustion of the particulate matter slows down during the regeneration processing execution, and the exhaust gas temperature in the exhaust passage is lowered. Accordingly, the rise in the exhaust gas temperature attributable to the regeneration processing for the filter while the vehicle is stopped can be suppressed.

It is preferable that the supply amount of the fuel be decreased such that a temperature of the filter is lowered to a minimum temperature allowing regeneration of the filter to be continued in a case where the fuel supply amount is decreased in this manner.

According to this configuration, the exhaust gas temperature can become as low as possible while the regeneration of the filter is continued. Also, the exhaust gas temperature on an exhaust upstream side from the reduction solution supply valve is lowered in this case, and thus the lowering of the exhaust gas temperature attributable to the supply of the reduction solution can be more effectively performed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating an internal combustion engine to which a first embodiment of an exhaust gas control device for an internal combustion engine, mounted on a vehicle, is applied and a configuration in the vicinity of the internal combustion engine;
FIG. 2 is a flowchart illustrating a series of processing procedure for lowering an exhaust gas temperature according to this embodiment;
FIG. 3 is a conceptual diagram illustrating a relationship between a target regeneration temperature and a fuel supply amount;
FIG. 4 is a flowchart illustrating a processing procedure for decreasing the fuel supply amount according to this embodiment;
FIG. 5 is a flowchart illustrating a series of processing procedure for lowering an exhaust gas temperature according to a second embodiment;
FIG. 6 is a flowchart illustrating a processing procedure for cooling supply according to this embodiment;
FIG. 7 is a conceptual diagram illustrating a relationship between an engine rotation speed and an intake air amount, and a urea injection pressure;
FIG. 8 is a conceptual diagram illustrating a relationship between a target regeneration temperature and a cooling supply amount;
FIG. 9 is a flowchart illustrating a processing procedure for decreasing a fuel supply amount according to a modification example of the first embodiment; and
FIG. 10 is a flowchart illustrating a series of processing procedure for lowering an exhaust gas temperature according to a modification example of the second embodiment.

### DETAILED DESCRIPTION OF EMBODIMENTS

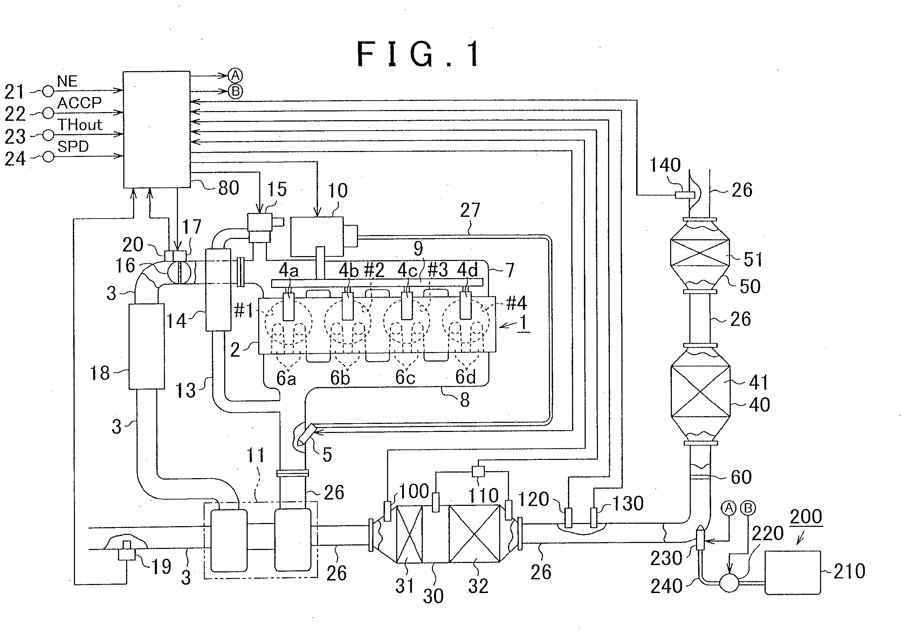

(First Embodiment) Hereinafter, a first embodiment of an exhaust gas control device for an internal combustion engine mounted on a vehicle will be described with reference to FIGS. 1 to 4.

FIG. 1 is a schematic configuration diagram illustrating a diesel engine (hereinafter, simply referred to as an "engine") to which the exhaust gas control device according to this embodiment is applied and a configuration in the vicinity of the exhaust gas control device and the engine. A plurality of cylinders #1 to #4 are disposed in the engine 1. A plurality of fuel injection valves 4a to 4d are mounted on a cylinder head 2. The fuel injection valves 4a to 4d inject a fuel into respective combustion chambers of the cylinders #1 to #4. An intake port that guides fresh air into the cylinders and exhaust ports 6a to 6d that discharge a combustion gas out of the cylinders are disposed in the cylinder head 2 to correspond to the respective cylinders #1 to #4.

The fuel injection valves 4a to 4d are connected to a common rail 9 that accumulates a high-pressure fuel. The common rail 9 is connected to a supply pump 10. The supply pump 10 suctions a fuel in a fuel tank and supplies the high-pressure fuel to the common rail 9. The high-pressure fuel that is supplied to the common rail 9 is injected from the fuel injection valves 4a to 4d into the cylinders when the fuel injection valves 4a to 4d are open.

An intake manifold 7 is connected to the intake port. The intake manifold 7 is connected to an intake passage 3. An intake throttle valve 16 that adjusts an intake air amount is disposed in the intake passage 3.

An exhaust manifold 8 is connected to the exhaust ports 6a to 6d. The exhaust manifold 8 is connected to an exhaust passage 26. A turbocharger 11 that supercharges the suctioned air which is guided into the cylinders by using an exhaust pressure is disposed in the middle of the exhaust passage 26. An intercooler 18 is disposed in the intake passage 3 between an intake side compressor of the turbocharger 11 and the intake throttle valve 16. The intercooler 18 allows the suctioned air, which rises in temperature due to the supercharging by the turbocharger 11, to be cooled.

A first purification member 30 that purifies an exhaust gas is disposed on a downstream side from an exhaust side turbine of the turbocharger 11 in the middle of the exhaust passage 26. An oxidation catalyst 31 and a filter 32 are arranged, in series with respect to an exhaust gas flow direction, in the first purification member 30.

A catalyst that performs an oxidation processing on HC in the exhaust gas is supported by the oxidation catalyst 31. The filter 32 is a member that collects a particulate matter (PM) in the exhaust gas, and is formed of porous ceramics. A catalyst that promotes PM oxidation is supported by the filter 32. The PM in the exhaust gas is collected when the PM in the exhaust gas passes through a porous wall of the filter 32.

A fuel supply valve 5 that supplies a fuel as an additive to the oxidation catalyst 31 and the filter 32 is disposed in the vicinity of a collecting unit of the exhaust manifold 8. The fuel supply valve 5 is connected to the supply pump 10 via a fuel supply pipe 27. A position where the fuel supply valve 5 is arranged can be appropriately changed on an exhaust upstream side from the first purification member 30 in an exhaust system. The fuel as the additive may also be supplied to the oxidation catalyst 31 and the filter 32 by adjusting a fuel injection time of the catalyst and performing a post-injection.

When the amount of the PM that is collected by the filter 32 (hereinafter, referred to as a PM deposition amount PMsm) exceeds a predetermined regeneration initiation value PMB, a regeneration processing for the filter 32 is initiated and the fuel is injected into the exhaust manifold 8 from the fuel supply valve 5. The fuel that is injected from the fuel supply valve 5 is combusted when the fuel that is injected from the fuel supply valve 5 reaches the oxidation catalyst 31. This causes an exhaust gas temperature to rise. A temperature of the filter 32 rises when the exhaust gas that rises in temperature due to the oxidation catalyst 31 flows into the filter 32. This causes the PM that is deposited in the filter 32 to be subjected to a combustion processing and allows the filter 32 to be regenerated. When the PM deposition amount PMsm decreases to or below a predetermined regeneration termination value PMe, the fuel injection from the fuel supply valve 5 is terminated and the regeneration processing is terminated.

A second purification member 40 that purifies the exhaust gas is disposed on a downstream side from the first purification member 30 in the middle of the exhaust passage 26. In the second purification member 40, a selective reduction type NOx catalyst (hereinafter, referred to as an SCR catalyst) 41 is arranged as a NOx purification catalyst that purifies NOx in the exhaust gas by using a reduction solution.

A third purification member 50 that purifies the exhaust gas is disposed on a downstream side from the second purification member 40 in the middle of the exhaust passage 26. An ammonia oxidation catalyst 51 that purifies ammonia in the exhaust gas is arranged in the third purification member 50.

A urea water supply mechanism 200 as a reduction solution supply mechanism that supplies the reduction solution to the SCR catalyst 41 is disposed in the engine 1. The urea water supply mechanism 200 is configured to have a tank 210 that stores urea water, a urea supply valve 230 that injects and supplies the urea water into the exhaust passage 26, a supply passage 240 that connects the urea supply valve 230 and the tank 210 to each other, a pump 220 that is disposed in the middle of the supply passage 240, and the like.

The urea supply valve 230 is disposed in the exhaust passage 26 between the first purification member 30 and the second purification member 40. An injection hole of the urea supply valve 230 faces the SCR catalyst 41. When the urea supply valve 230 is open, the urea water is injected and supplied into the exhaust passage 26.

The pump 220 is an electric pump, and feeds the urea water from the tank 210 toward the urea supply valve 230 during a positive rotation. The pump 220 feeds the urea water from the urea supply valve 230 toward the tank 210 during a reverse rotation. During the reverse rotation of the pump 220, the urea water is recovered from the urea supply valve 230 and the supply passage 240 and returns to the tank 210.

A dispersion plate 60 that promotes atomization of the urea water by dispersing the urea water which is injected from the urea supply valve 230 on an exhaust upstream side from the SCR catalyst 41 is disposed in the exhaust passage 26 between the urea supply valve 230 and the SCR catalyst 41.

The urea water that is injected from the urea supply valve 230 is hydrolyzed by heat of the exhaust gas and becomes ammonia. This ammonia is used to reduce NOx that is occluded in the SCR catalyst 41. The engine 1 is also provided with an exhaust gas recirculation device (hereinafter, referred to as an EGR device). The EGR device is a device that guides a part of the exhaust gas to the suctioned air to lower a combustion temperature in the cylinder and reduce a NOx generation amount. The EGR circulation device is configured to have an EGR passage 13 that allows the intake passage 3 and the exhaust manifold 8 to communicate with each other, an EGR valve 15 and an EGR cooler 14 that are disposed in the EGR passage 13, and the like. A recirculation amount of the exhaust gas that is guided from the exhaust passage 26 to the intake passage 3, that is, an EGR amount, is metered when an opening of the EGR valve 15 is adjusted. The temperature of the exhaust gas that flows in the EGR passage 13 is lowered by the EGR cooler 14.

Various sensors that detect an engine operation state are mounted on the engine 1. For example, an air flow meter 19 detects an intake air amount GA in the intake passage 3. A throttle valve opening sensor 20 detects an opening of the intake throttle valve 16. An engine rotation speed sensor 21 detects a rotation speed of a crankshaft, that is, an engine rotation speed NE. An accelerator sensor 22 detects the actuation level on an accelerator pedal, that is, an accelerator operation amount ACCP. An outside air temperature sensor 23 detects an outside air temperature THout. A vehicle speed sensor 24 detects a vehicle speed SPD of a vehicle on which the engine 1 is mounted.

A first exhaust gas temperature sensor 100 that is disposed on an exhaust upstream side from the oxidation catalyst 31 detects a first exhaust gas temperature TH1 that is an exhaust gas temperature prior to inflow into the oxidation catalyst 31. A differential pressure sensor 110 detects a differential pressure ΔP that is a pressure difference between exhaust pressures on an exhaust upstream side and a downstream side from the filter 32. A second exhaust gas temperature sensor 120 and a first NOx sensor 130 are disposed on an exhaust upstream side from the urea supply valve 230 in the exhaust passage 26 between the first purification member 30 and the second purification member 40. The second exhaust gas temperature sensor 120 detects a second exhaust gas temperature TH2 that is the temperature of the exhaust gas which flows out from the filter 32. The first NOx sensor 130 detects a first NOx concentration N1 that is a NOx concentration in the exhaust gas prior to inflow into the SCR catalyst 41, that is, a NOx concentration in the exhaust gas prior to purification by the SCR catalyst 41. A second NOx sensor 140 that detects a second NOx concentration N2 which is a NOx concentration of the exhaust gas purified by the SCR catalyst 41 is disposed in the exhaust passage 26 on a downstream side from the third purification member 50.

Outputs from these various sensors and the like are input into a control device 80. A configuration of the control device 80 revolves around a microcomputer that is provided with a central processing unit (CPU), a read-only memory (ROM) where various programs, maps, and the like are stored in advance, a random access memory (RAM) that temporarily stores CPU calculation results and the like, a timer counter, an input interface, an output interface, and the like.

Various controls for the engine 1, such as fuel injection amount control and fuel injection time control for the fuel injection valves 4a to 4d and the fuel supply valve 5, discharge pressure control for the supply pump 10, driving amount control for an actuator 17 opening and closing the intake throttle valve 16, and opening control for the EGR valve 15, are performed by the control device 80. Also, various exhaust gas purification controls such as the regeneration processing for combusting the PM collected by the filter 32 are performed by the control device 80.

Also, the control device 80 controls urea water supply by the urea supply valve 230 as an example of the exhaust gas purification controls. During the supply control, a urea supply amount QE that is required for a reduction processing of NOx which is discharged from the engine 1 is calculated based on the engine operation state and the like. Then, an opening state of the urea supply valve 230 is controlled so that the calculated urea supply amount QE is injected from the urea supply valve 230.

When the regeneration processing for the filter 32 is performed while the vehicle is stopped, the exhaust gas temperature in the exhaust passage 26 may increased because cooling of the exhaust system by traveling wind is not performed and, for example, the temperature of the exhaust gas discharged from the vehicle may also rise.

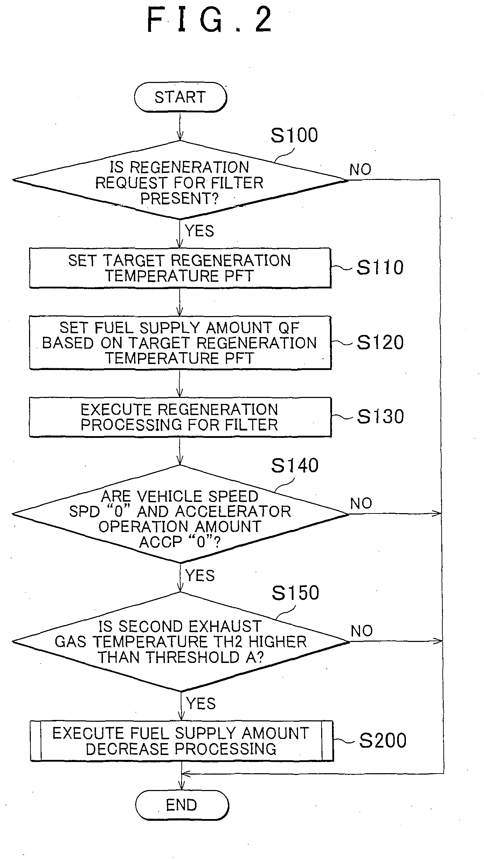

The control device 80 executes an exhaust gas temperature lowering processing that is illustrated in FIG. 2 so that the rise in the exhaust gas temperature is suppressed even in a case where the regeneration processing for the filter 32 is performed while the vehicle is stopped. Hereinafter, a procedure of the exhaust gas temperature lowering processing will be described.

Once the processing that is illustrated in FIG. 2 is initiated, the control device 80 first determines whether or not a regeneration request for the filter 32 is present (S100). In Step S100, it is determined that the regeneration request for the filter 32 is present when the PM deposition amount PMsm exceeds the regeneration initiation value PMB described above. When the regeneration request for the filter 32 is absent (S100: NO), the control device 80 temporarily terminates this processing.

When the regeneration request for the filter 32 is present (S100: YES), the control device 80 sets a target regeneration temperature PFT for regeneration processing execution (S110). The target regeneration temperature PFT is the temperature of the filter 32 that is required for a combustion processing of particulate matter deposited in the filter 32. A temperature that allows the combustion processing of the deposited particulate matter as soon as possible within a range in which the filter 32 and the like are not affected by thermal damage is set, based on the engine operation state and the like, as the target regeneration temperature PFT.

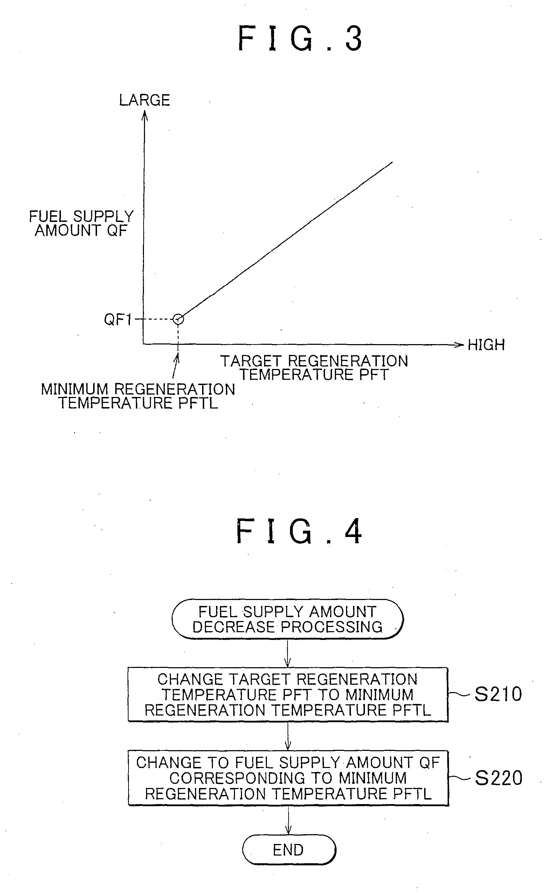

Then, the control device 80 sets a fuel supply amount QF that is required for increasing the temperature of the filter 32 to the set target regeneration temperature PFT (S120). As illustrated in FIG. 3, the fuel supply amount QF is variably set based on the target regeneration temperature PFT so that the fuel supply amount QF becomes larger as the set target regeneration temperature PFT becomes higher. A minimum regeneration temperature PFTL that is illustrated in FIG. 3 is a minimum temperature of the filter 32 which allows the regeneration of the filter 32 to be continued.

After the fuel supply amount QF is set, the control device 80 controls driving of the fuel supply valve 5 so that the amount of the fuel equivalent to the fuel supply amount QF is supplied, and executes the regeneration processing for the filter 32 (S130).

When the execution of the regeneration processing for the filter 32 is initiated, the control device 80 determines whether or not the current vehicle speed SPD is "0" and the accelerator operation amount ACCP is "0" (S140). The control device 80 temporarily terminates this processing when the vehicle is traveling with the vehicle speed SPD not being "0" or when the engine 1 is not in an idle operation state with the accelerator operation amount ACCP not being "0" (S140: NO).

The control device 80 determines whether or not the current second exhaust gas temperature TH2 exceeds a threshold A when the vehicle speed SPD is "0" and the accelerator operation amount ACCP is "0" (S140: YES), that is, when the vehicle is stopped and the engine 1 is in the idle operation state (S150). A value at which it can be determined that the second exhaust gas temperature TH2 is in a state of being higher than a predetermined value is set as the threshold A. In this embodiment, for example, a temperature that is lower to some extent than the second exhaust gas temperature TH2 at a time when the temperature of the exhaust gas discharged from the vehicle reaches a regulation value is set as the threshold A.

When the second exhaust gas temperature TH2 does not exceed the threshold A (S150: NO), the control device 80 temporarily terminates this processing. When the second exhaust gas temperature TH2 exceeds the threshold A (S150: YES), the control device 80 executes a fuel supply amount decrease processing so as to lower the exhaust gas temperature (S200) and temporarily terminates this processing. The decrease processing in Step S200 is executed until the second exhaust gas temperature TH2 is lowered to a temperature that is slightly lower than the threshold A.

FIG. 4 illustrates a processing procedure relating to the fuel supply amount decrease processing that is executed in Step S200. When the decrease processing is initiated, the control device 80 changes the target regeneration temperature PFT that is set in Step S110 described above to the minimum regeneration temperature PFTL described above (S210).

Then, the control device 80 changes the fuel supply amount QF set in Step S120 described above to the fuel supply amount QF corresponding to the minimum regeneration temperature PFTL (fuel supply amount QF1 illustrated in FIG. 3) (S220), and terminates the processing procedure relating to the fuel supply amount decrease processing.

When the fuel supply amount QF is changed to the amount corresponding to the minimum regeneration temperature PFTL (fuel supply amount QF1), the control device 80 controls the driving of the fuel supply valve 5 so that the amount of the fuel equivalent to the fuel supply amount QF1 is supply and continues the regeneration processing for the filter 32.

Next, an effect of the exhaust gas temperature lowering processing described above will be described. When the regeneration processing for the filter 32 is executed with the vehicle being in a stopped state and the engine 1 being in the idle operation state (S140: YES), the second exhaust gas temperature TH2 and the threshold A are compared to each other (S150). If the second exhaust gas temperature TH2 exceeds the threshold A (S150: YES), the fuel supply amount decrease processing is executed (S200). During the decrease processing, the target regeneration temperature PFT is lowered to the minimum regeneration temperature PFTL (S210 in FIG. 4), and thus the fuel supply amount QF is decreased from an amount set according to the engine operation state to the amount corresponding to the minimum regeneration temperature PFTL (S220 in FIG. 4). When the fuel supply amount QF is decreased during the regeneration processing execution in this manner, the combustion of the particulate matter in the filter 32 slows down during the regeneration processing execution. This causes the exhaust gas temperature in the exhaust passage 26 to become lower than that prior to the decrease in the fuel supply amount QF. Accordingly, the rise in the exhaust gas temperature can be suppressed while the regeneration of the filter 32 is continued when the regeneration processing for the filter 32 is performed while the vehicle is stopped.

If the second exhaust gas temperature TH2 exceeds the threshold A (S150: YES), the target regeneration temperature PFT is lowered to the minimum regeneration temperature PFTL. Accordingly, the exhaust gas temperature can become as low as possible while the regeneration of the filter 32 is continued.

The following effects can be achieved according to this embodiment described above.
(1) The fuel supply amount QF is decreased in a case where the second exhaust gas temperature TH2 exceeds the threshold A while the regeneration processing for the filter 32 is executed with the vehicle being stopped. Accordingly, the rise in the exhaust gas temperature attributable to the regeneration processing for the filter 32 executed while the vehicle is stopped can be suppressed.
(2) In a case where the second exhaust gas temperature TH2 exceeds the threshold A while the regeneration processing for the filter 32 is executed with the vehicle being stopped, the fuel supply amount QF is decreased so that the temperature of the filter 32 is lowered to the minimum regeneration temperature PFTL at which the regeneration of the filter 32 can be continued. Accordingly, the exhaust gas temperature can become as low as possible while the regeneration of the filter 32 is continued.

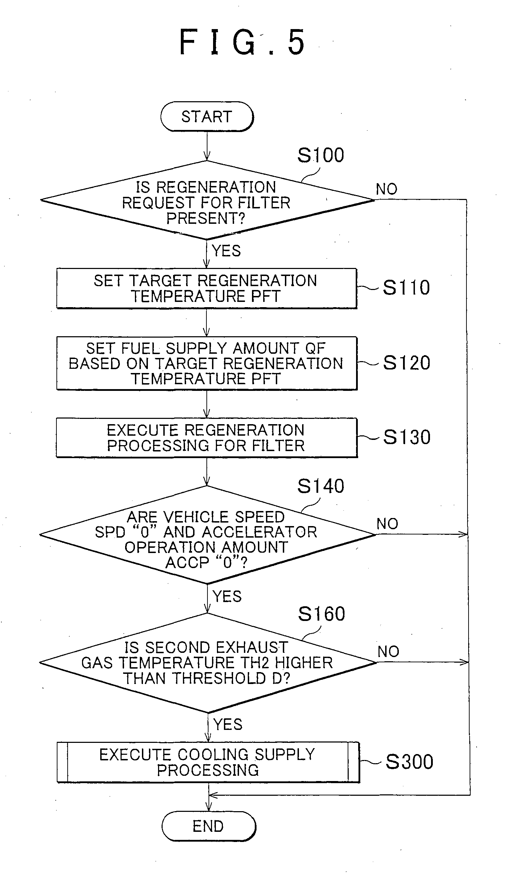

(Second Embodiment) Next, a second embodiment of the exhaust gas control device for an internal combustion engine mounted on a vehicle will be described with reference to FIGS. 5 to 8.

In the first embodiment, the fuel supply amount QF is decreased so as to lower the exhaust gas temperature. The second embodiment differs from the first embodiment in that the urea water is supply so as to lower the exhaust gas temperature in the second embodiment. Hereinafter, an exhaust gas temperature lowering processing according to this embodiment will be described while focusing on this difference.

FIG. 5 illustrates a procedure of the exhaust gas temperature lowering processing according to this embodiment. In FIG. 5, the same Step numbers are attached to the same Steps as in FIG. 2. From Step S100 to Step S140, the processing procedure of the exhaust gas temperature lowering processing according to this embodiment is the same as the processing procedure of the exhaust gas temperature lowering processing of the first embodiment.

When it is determined that the vehicle speed SPD is "0" and the accelerator operation amount ACCP is "0" in the processing of Step S140 according to this embodiment (S140: YES), that is, when the vehicle is stopped and the engine 1 is in the idle operation state, the control device 80 determines whether or not the current second exhaust gas temperature TH2 exceeds a threshold D (S160).

A value at which it can be determined that the second exhaust gas temperature TH2 is in a state of being higher than a predetermined value is set as the threshold D. For example, the threshold D can be set to a temperature that is higher than the threshold A described above in a case where an exhaust gas temperature lowering effect due to the decrease in the fuel supply amount QF is greater than an exhaust gas temperature lowering effect due to the urea supply. Preferably, the threshold D is set to a temperature that is lower than the threshold A described above in a case where the exhaust gas temperature lowering effect due to the decrease in the fuel supply amount QF is smaller than the exhaust gas temperature lowering effect due to the urea supply. The threshold D can be set to a temperature that is equal to the threshold A described above in a case where the exhaust gas temperature lowering effect due to the decrease in the fuel supply amount QF is equal to the exhaust gas temperature lowering effect due to the urea supply.

When the second exhaust gas temperature TH2 does not exceed the threshold D (S160: NO), the control device 80 temporarily terminates this processing. When the second exhaust gas temperature TH2 exceeds the threshold D (S160: YES), the control device 80 executes a cooling supply processing that is the urea supply for lowering the exhaust gas temperature (S300) and temporarily terminates this processing. The cooling supply processing in Step S300 is executed until the second exhaust gas temperature TH2 is lowered to a temperature that is slightly lower than the threshold D.

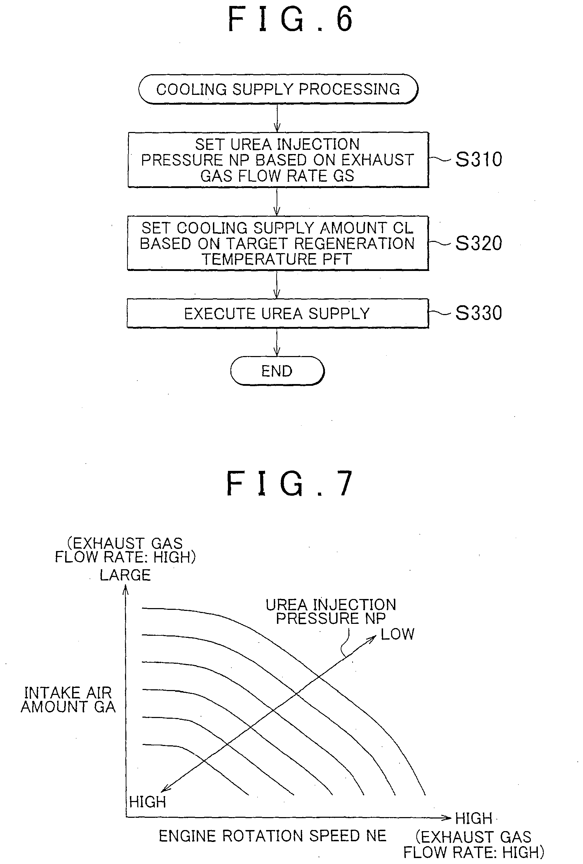

FIG. 6 illustrates a processing procedure of the cooling supply processing that is executed in Step S300. When the cooling supply processing is initiated, the control device 80 sets a urea injection pressure NP based on an exhaust gas flow rate GS in the exhaust passage 26 (S310).

In Step S310, the urea injection pressure NP is variably set so that the urea injection pressure NP becomes higher as the exhaust gas flow rate GS becomes lower. A minimum pressure of the urea injection pressure NP that is variably set in Step S310 is set to a pressure which is higher than a urea injection pressure for a case where the urea water is supplied for exhaust gas purification. Herein, the exhaust gas flow rate becomes lower as the engine rotation speed NE becomes lower or the intake air amount GA becomes smaller. In this embodiment, the urea injection pressure NP is set based on the engine rotation speed NE and the intake air amount GA.

As illustrated in FIG. 7, the urea injection pressure NP is set to a pressure that becomes higher as the engine rotation speed NE becomes lower. The urea injection pressure NP is set to a pressure that becomes higher as the intake air amount GA becomes smaller.

Then, the control device 80 sets a cooling supply amount CL that is a urea supply amount for cooling supply based on the target regeneration temperature PFT which is set in Step S110 illustrated in FIG. 5 (S320).

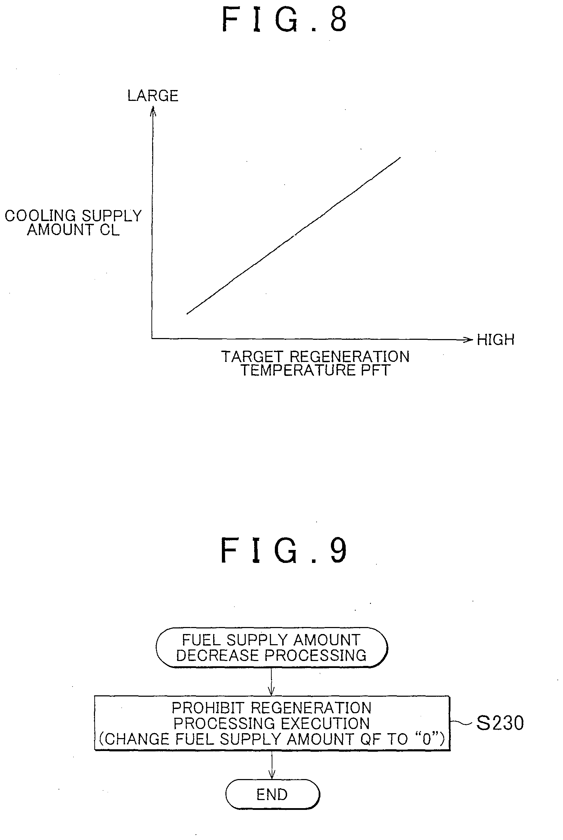

As illustrated in FIG. 8, the cooling supply amount CL is variably set to become larger as the target regeneration temperature PFT becomes higher. After the urea injection pressure NP and the cooling supply amount CL are set in this manner, the control device 80 executes the urea supply for cooling (S330). In Step S330, the control device 80 controls a rotation speed of the pump 220 so that an injection pressure of the urea water supplied from the urea supply valve 230 becomes the urea injection pressure NP set in Step S310 and controls the driving of the urea supply valve 230 so that the amount of the urea water equivalent to the cooling supply amount CL is supplied. Then, the control device 80 terminates the processing procedure relating to the cooling supply processing.

Next, an effect that is achieved by the exhaust gas temperature lowering processing according to this embodiment will be described. When the regeneration processing for the filter 32 is executed with the vehicle being in a stopped state and the engine 1 being in the idle operation state (S140 in FIG. 5: YES), the second exhaust gas temperature TH2 and the threshold D are compared to each other (S160). If the second exhaust gas temperature TH2 exceeds the threshold D (S160: YES), the cooling supply processing using the urea water is executed (S300) and the urea water is supplied into the exhaust passage 26. The supplied urea water is vaporized in the exhaust passage 26 to take ambient heat, and thus the exhaust gas temperature in the exhaust passage 26 is lowered. Accordingly, the rise in the exhaust gas temperature can be suppressed while the regeneration of the filter 32 is continued when the regeneration processing for the filter 32 is performed while the vehicle is stopped.

Since the urea supply valve 230 is disposed on an exhaust downstream side from the filter 32, the exhaust gas temperature is lowered by a vaporization heat of the urea water on the exhaust downstream from the filter 32. Accordingly, the exhaust gas temperature can be lowered on an exhaust downstream side from the urea supply valve 230 even without having to significantly lower the regeneration temperature itself of the filter 32. In a case where the fuel supply amount QF is decreased so as to lower the exhaust gas temperature as in, for example, the first embodiment, a regeneration completion time for the filter 32 may be lengthened. However, in the exhaust gas temperature lowering processing according to this embodiment, the lengthening of the regeneration completion time can be suppressed.

A minimum pressure of the urea injection pressure NP that is variably set in Step S310 in FIG. 6 is set to a pressure which is higher than the urea injection pressure for a case where the urea water is supplied for exhaust gas purification. Accordingly, when the urea water is supplied from the urea supply valve 230 by the second exhaust gas temperature TH2 exceeding the threshold D, the injection pressure of the urea water is higher than in a case where the urea water is supplied for exhaust gas purification. When the injection pressure of the urea water becomes higher in this manner, atomization of the supplied urea water is accelerated and vaporization of the urea water is promoted. When the vaporization of the urea water is promoted, the amount of the urea water that is adhered to an inner wall of the exhaust passage 26 decreases. Accordingly, discharge of the urea water adhered to the inner wall of the exhaust passage 26 from the vehicle can be suppressed when the stopped vehicle starts moving.

Also, the atomization of the supplied urea water is unlikely to proceed when the rotation speed of the engine 1 is low and the intake air amount GA is small as in the idle operation state, that is, when the exhaust gas flow rate in the exhaust passage 26 is low. The urea injection pressure NP becomes higher as the engine rotation speed NE is lower and the exhaust gas flow rate GS is lower or the intake air amount GA is smaller and the exhaust gas flow rate GS is lower. Accordingly, the atomization of the supplied urea water can be accelerated even when the exhaust gas flow rate GS is low as in the idle operation state.

The following effects can be achieved according to this embodiment described above.
(3) The urea water for exhaust gas cooling is supplied from the urea supply valve 230 in a case where the second exhaust gas temperature TH2 exceeds the threshold D while the regeneration processing for the filter 32 is executed with the vehicle being stopped. Accordingly, the rise in the exhaust gas temperature attributable to the regeneration processing for the filter 32 executed while the vehicle is stopped can be suppressed.
(4) Since the urea supply valve 230 is disposed on an exhaust downstream side from the filter 32, the exhaust gas temperature can be lowered on an exhaust downstream side from the urea supply valve 230 even without having to significantly lower the regeneration temperature itself of the filter 32.
(5) When the urea water is supplied from the urea supply valve 230 by the second exhaust gas temperature TH2 exceeding the threshold D, the injection pressure of the urea water is higher than in a case where the urea water is supplied for exhaust gas purification. Accordingly, the vaporization of the urea water is promoted, and the discharge of the urea water adhered to the inner wall of the exhaust passage 26 from the vehicle can be suppressed when the stopped vehicle starts moving.
(6) Since the urea injection pressure NP becomes higher as the engine rotation speed NE becomes lower, the atomization of the supplied urea water can be accelerated even in a case where the exhaust gas flow rate in the exhaust passage 26 is low.

Each of the embodiments described above can also be modified as follows. In the first embodiment, the target regeneration temperature PFT that is set based on the engine operation state is lowered to the minimum regeneration temperature PFTL so that the exhaust gas temperature is lowered while the regeneration of the filter 32 by fuel supply is continued. Alternatively, the execution of the regeneration processing may be prohibited as a fuel supply amount decrease processing.

FIG. 9 illustrates the fuel supply amount decrease processing according to this modification example. When the fuel supply amount decrease processing according to this modification example is initiated, the control device 80 prohibits the execution of the regeneration processing (S230). More specifically, the control device 80 changes the fuel supply amount QF that is set in Step S120 which is illustrated in FIG. 2 to "0" and terminates this processing. In a case where a control flag or the like that allows the execution of the regeneration processing for the filter 32 is prepared, the execution of the regeneration processing may be prohibited by changing a value of the control flag. In the case of this modification example, at least the rise in the exhaust gas temperature attributable to the regeneration processing for the filter 32 executed while the vehicle is stopped can be suppressed although the regeneration of the filter 32 cannot be continued.

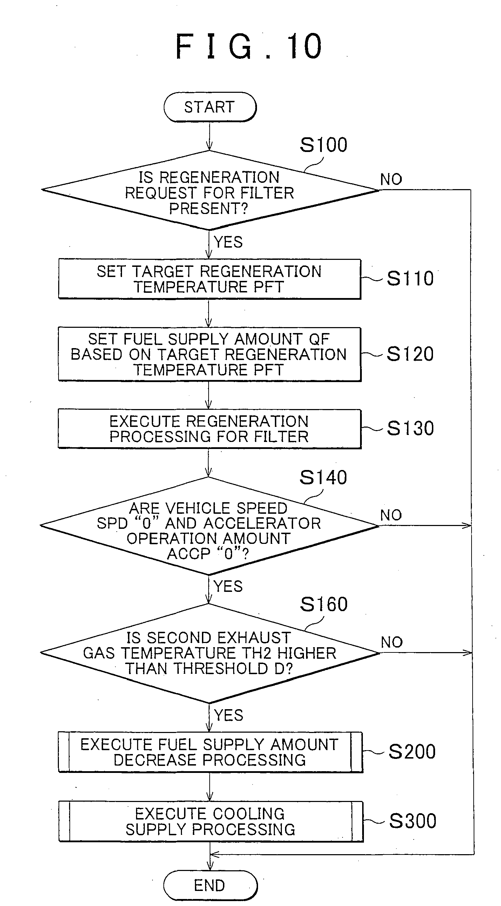

The fuel supply amount decrease processing described in the first embodiment may be combined with the second embodiment. FIG. 10 illustrates an example of an exhaust gas temperature lowering processing according to this modification example. As illustrated in FIG. 10, the control device 80 executes the fuel supply amount decrease processing described in the first embodiment (S200) when it is determined that the second exhaust gas temperature TH2 exceeds the threshold D in Step S140 of the exhaust gas temperature lowering processing described in the second embodiment (S140: YES). Also, the control device 80 executes the cooling supply processing described in the second embodiment (S300) and terminates this processing.

In the case of this modification example, operations and effects similar to those of the first embodiment and the second embodiment can be achieved. In the case of this modification example, the fuel supply amount decrease processing described above is executed, and thus the target regeneration temperature PFT of the filter 32 is lowered to the minimum regeneration temperature PFTL. In a case where the lowering of the target regeneration temperature PFT and the cooling supply by the urea water are combined with each other in this manner, the exhaust gas temperature is lower on an exhaust upstream side than in the urea supply valve 230 compared to a case where the exhaust gas temperature lowering processing according to the second embodiment is executed. Accordingly, the length of time that is required for lowering the exhaust gas temperature to a predefined temperature is shortened, and the lowering of the exhaust gas temperature by the urea water supply can be more effectively performed.

The determination condition of the "accelerator operation amount ACCP being "0"" may be omitted from the determination conditions for Step S140. Even in this case, the fuel supply amount decrease processing and the cooling supply processing are executed in a case where at least the determination condition of the "vehicle speed SPD being "0"" is established and the cooling of the exhaust system by the traveling wind is not performed. Accordingly, the rise in the exhaust gas temperature attributable to the regeneration processing for the filter 32 executed while the vehicle is stopped can be suppressed.

In Step S140, it is determined whether or not a current state of the vehicle is a state where the cooling of the exhaust system by the traveling wind is not performed by determining whether or not the vehicle speed SPD is "0". Herein, the state where the cooling of the exhaust system is not sufficiently performed includes low-speed traveling of the vehicle. Accordingly, the determination condition of the "vehicle speed SPD being "0"" in Step S140 may be changed to the determination condition of the "vehicle traveling at a low speed."

The target regeneration temperature PFT is lowered to the minimum regeneration temperature PFTL during the fuel supply amount decrease processing. However, the target regeneration temperature PFT may not be lowered to the minimum regeneration temperature PFTL. The exhaust gas temperature can be lowered insofar as the target regeneration temperature PFT is changed to a temperature that is lower than the target regeneration temperature PFT set in Step S110 and the fuel supply amount QF is decreased.

The fuel supply amount QF is decreased by changing the target regeneration temperature PFT during the fuel supply amount decrease processing. Alternatively, the fuel supply amount QF itself may be directly corrected to be decreased without changing the target regeneration temperature PFT.

The cooling supply amount CL is variably set based on the target regeneration temperature PFT. However, more simply, the cooling supply amount CL may have a fixed value set in advance. The urea injection pressure NP is variably set based on the exhaust gas flow rate. However, more simply, the urea injection pressure NP may have a fixed value set in advance. Even in a case where the fixed value is used, it is preferable that the urea injection pressure NP during the cooling supply processing be higher than in a case where the urea water is supplied for exhaust gas purification.

Determination relating to the availability of the execution of the fuel supply amount decrease processing and the cooling supply processing is performed based on the second exhaust gas temperature TH2. However, the determination on the availability of the execution may also be performed based on the exhaust gas temperature at another site.

The urea water is used as the reduction solution. However, another reduction solution may also be used. A catalyst other than the selective reduction type NOx catalyst may also be used as the NOx purification catalyst.

The exhaust gas temperature lowering processing described in the first embodiment can also be applied to an internal combustion engine, mounted on a vehicle, that is not provided with various mechanisms which perform urea supply control.

## Claims

1. An exhaust gas control device for an internal combustion engine (1) mounted on a vehicle, the internal combustion engine (1) including a filter (32) provided in an exhaust passage (26), the filter (32) being configured to collect particulate matter and a reduction solution supply valve (230) provided downstream of the filter (32) in an exhaust gas flow direction, the reduction solution supply valve (230) being configured to supply a reduction solution for exhaust gas purification into the exhaust passage (26), the exhaust gas control device comprising:
a control device (80) configured to
a) execute a regeneration processing to regenerate the filter (32) by supplying a fuel into a portion of the exhaust passage (26) located upstream of the filter (32) in the exhaust gas flow direction, and
b) control the reduction solution supply valve (230) to supply the reduction solution when an exhaust gas temperature exceeds a predetermined temperature while the regeneration processing is executed with the vehicle being stopped,
**characterized in that** the control device (80) is configured to control an injection pressure of the reduction solution such that the injection pressure when the reduction solution is supplied from the reduction solution supply valve (230) by the exhaust gas temperature exceeding the predetermined temperature while the regeneration processing is executed with the vehicle being stopped is higher than the injection pressure when the reduction solution is supplied for exhaust gas purification.

2. The exhaust gas control device according to claim 1,
wherein the control device (80) is configured to control the reduction solution supply valve (230) to supply the reduction solution such that the injection pressure becomes higher as an engine rotation speed of the internal combustion engine (1) becomes lower.

3. The exhaust gas control device according to claim 2,
wherein the control device (80) is configured to control a supply amount of the fuel such that the supply amount when the exhaust gas temperature exceeds the predetermined temperature while the regeneration processing is executed with the vehicle being stopped is smaller than the supply amount when the exhaust gas temperature does not exceed the predetermined temperature while the regeneration processing is executed with the vehicle being stopped.

4. The exhaust gas control device according to claim 3,
wherein the control device (80) is configured to decrease the supply amount of the fuel such that a temperature of the filter (32) is lowered to a minimum temperature allowing regeneration of the filter (32) to be continued.

## Patentansprüche

1. Abgassteuervorrichtung für einen Verbrennungsmotor (1), der an einem Fahrzeug angebracht ist, wobei der Verbrennungsmotor (1) einen Filter (32), der in einem Abgaskanal (26) vorgesehen ist, wobei der Filter (32) konfiguriert ist, Feststoffe zu sammeln, und ein Reduzierungslösungszuführventil (230) aufweist, das in eine Abgasstromrichtung dem Filter (32) nachgelagert vorgesehen ist, wobei das Reduzierungslösungszuführventil (230) konfiguriert ist, eine Reduzierungslösung zur Abgasreinigung in den Abgaskanal (26) zuzuführen, wobei die Abgassteuervorrichtung aufweist:
eine Steuervorrichtung (80), die konfiguriert ist:
a) eine Regenerationsverarbeitung auszuführen, um den Filter (32) durch Zuführen eines Kraftstoffs in einen Abschnitt des Abgaskanals (26) zu regenerieren, der in die Abgasstromrichtung dem Filter (32) vorgelagert angeordnet ist, und
b) das Reduzierungslösungszuführventil (230) zu steuern, die Reduzierungslösung zuzuführen, wenn eine Abgastemperatur eine vorgegebene Temperatur überschreitet, während die Regenerationsverarbeitung bei gestopptem Fahrzeug ausgeführt wird,
**dadurch gekennzeichnet, dass** die Steuervorrichtung (80) konfiguriert ist, einen Einspritzdruck der Reduzierungslösung so zu steuern, dass der Einspritzdruck, wenn die Reduzierungslösung vom Reduzierungslösungszuführventil (230) dadurch zugeführt wird, dass die Abgastemperatur die vorgegebene Temperatur überschreitet, während die Regenerationsverarbeitung bei gestopptem Fahrzeug ausgeführt wird, höher als der Einspritzdruck ist, wenn die Reduzierungslösung zur Abgasreinigung zugeführt wird.

2. Abgassteuervorrichtung nach Anspruch 1,
wobei die Steuervorrichtung (80) konfiguriert ist, das Reduzierungslösungszuführventil (230) zu steuern, die Reduzierungslösung so zuzuführen, dass der Einspritzdruck höher wird, wenn eine Motordrehzahl des Verbrennungsmotor (1) niedriger wird.

3. Abgassteuervorrichtung nach Anspruch 2,
wobei die Steuervorrichtung (80) konfiguriert ist, eine Zuführmenge des Kraftstoffs so zu steuern, dass die Zuführmenge, wenn die Abgastemperatur die vorgegebene Temperatur überschreitet, während die Regenerationsverarbeitung bei gestopptem Fahrzeug ausgeführt wird, kleiner als die Zuführmenge ist, wenn die Abgastemperatur nicht die vorgegebene Temperatur überschreitet, während die Regenerationsverarbeitung bei gestopptem Fahrzeug ausgeführt wird.

4. Abgassteuervorrichtung nach Anspruch 3,
wobei die Steuervorrichtung (80) konfiguriert ist, die Zuführmenge des Kraftstoffs so zu senken, dass eine Temperatur des Filters (32) auf eine Minimaltemperatur gesenkt wird, die es erlaubt, dass die Regeneration des Filters (32) fortgesetzt wird.

## Revendications

1. Dispositif de commande de gaz d'échappement pour un moteur à combustion interne (1) monté sur un véhicule, le moteur à combustion interne (1) comprenant un filtre (32) prévu dans un passage d'échappement (26), le filtre (32) étant configuré pour collecter de la matière en particules et une soupape d'alimentation en solution de réduction (230) prévue en aval du filtre (32) dans une direction d'écoulement de gaz d'échappement, la soupape d'alimentation en solution de réduction (230) étant configurée pour délivrer une solution de réduction pour une purification de gaz d'échappement dans le passage d'échappement (26), le dispositif de commande de gaz d'échappement comportant :
un dispositif de commande (80) configuré pour
a) exécuter un traitement de régénération pour régénérer le filtre (32) en délivrant un carburant dans une partie du passage d'échappement (26) située en amont du filtre (32) dans la direction d'écoulement de gaz d'échappement, et
b) commander la soupape d'alimentation en solution de réduction (230) pour délivrer la solution de réduction quand une température de gaz d'échappement dépasse une température prédéterminée alors que le traitement de régénération est exécuté avec le véhicule qui est arrêté,
**caractérisé en ce que** le dispositif de commande (80) est configuré pour commander une pression d'injection de la solution de réduction de telle sorte que la pression d'injection quand la solution de réduction est délivrée à partir de la soupape d'alimentation en solution de réduction (230) par la température de gaz d'échappement qui dépasse la température prédéterminée alors que le traitement de régénération est exécuté avec le véhicule qui est arrêté est plus élevée que la pression d'injection quand la solution de réduction est délivrée pour une purification de gaz d'échappement.

2. Dispositif de commande de gaz d'échappement selon la revendication 1,
dans lequel le dispositif de commande (80) est configuré pour commander la soupape d'alimentation en solution de réduction (230) pour délivrer la solution de réduction de telle sorte que la pression d'injection devient plus élevée lorsqu'une vitesse de rotation de moteur du moteur à combustion interne (1) devient plus basse.

3. Dispositif de commande de gaz d'échappement selon la revendication 2,
dans lequel le dispositif de commande (80) est configuré pour commander une quantité d'alimentation du carburant de telle sorte que la quantité d'alimentation quand la température de gaz d'échappement dépasse la température prédéterminée alors que le traitement de régénération est exécuté avec le véhicule qui est arrêté est plus petite que la quantité d'alimentation quand la température de gaz d'échappement ne dépasse pas la température prédéterminée alors que le traitement de régénération est exécuté avec le véhicule qui est arrêté.

4. Dispositif de commande de gaz d'échappement selon la revendication 3,
dans lequel le dispositif de commande (80) est configuré pour diminuer la quantité d'alimentation du carburant de telle sorte qu'une température du filtre (32) est abaissée à une température minimale permettant à la régénération du filtre (32) d'être poursuivie.
